# EUROPÄISCHE PATENTSCHRIFT

(11) **EP 2 020 519 B1**
(45) Veröffentlichungstag und Bekanntmachung des Hinweises auf die Patenterteilung: **24.03.2010**
(21) Anmeldenummer: 07014942.2
(22) Anmeldetag: 30.07.2007
(51) Int. Cl.: F16D 27/105

(54) **Schlingfederkupplung**
Wrap spring clutch
Embrayage de ressort enroulé

(43) Veröffentlichungstag der Anmeldung: 04.02.2009
(73) Patentinhaber: Hoerbiger Antriebstechnik GmbH, 86956 Schongau (DE)
(72) Erfinder: Nickel, Falk, 86925 Fuchstal (DE); Oswald, Johann, 82438 Eschenlohe (DE); Ackermann, Jürgen, Dr., 86875 Waal (DE); Sielaff, Tilo, 86971 Peiting (DE)
(74) Vertreter: Kitzhofer, Thomas

(56) Entgegenhaltungen:
- WO-A-2006/105423
- JP-A- 10 089 377
- US-A- 2 534 034

## Beschreibung

Die Erfindung betrifft eine Schlingfederkupplung gemäß dem Oberbegriff des Anspruches 1.

Eine derartige Schlingfederkupplung ist aus der US-A-2,534,034 bekannt, die ein rein passives Element ist, die nur eine AN/AUS-Funktion hat.

Eine gattungsgemäße Schlingfederkupplung ist ein rein mechanischer Kraftverstärker, so dass sie mit verhältnismäßig geringen Stellkräften hohe Momente übertragen kann. Prinzipiell haben diese Schlingfederkupplungen jedoch das Problem, dass die Kraftverstärkung nur in einer Dreh- bzw. Momentenrichtung funktioniert. Dies ist deshalb der Fall, da jeweils an einem Ende der Schlingfeder die Stellkräfte aufgebracht werden müssen, während am anderen Ende der Schlingfeder die Krafteinleitung bzw. Momentenübertragung erfolgt.

Im Zuge der Automatisierung und elektronischen Regelung von Antrieben für Maschinen und Kraftfahrzeuge hat die Bedeutung von Kupplungen mit entsprechenden Eigenschaften zugenommen. Die Kernanforderungen sind eine hohe Drehmomentvariabilität, kurze Reaktionszeit, kleiner Bauraum, geringer Aufwand und Energiebedarf des Kupplungsaktuators, hohe Zuverlässigkeit und möglichst konstantes Verhalten über den gesamten Lebensdauerzyklus. Zur Anwendung kommen heute vor allem Lamellenkupplungen mit unterschiedlichen Aktuatorsystemen. Diese können elektrisch, elektro-hydraulisch, pneumatisch, mechanisch oder mit MRF/ERF ausgeführt sein. Bei den bekannten Systemen ist der Aufwand mit zunehmendem Drehmomentbedarf sowohl für den übertragenden Teil als auch das Aktuatorsystem hoch. Die Integration des Systems ist zunehmend schwieriger und die Kosten hierfür steigen.

Es ist daher Aufgabe der vorliegenden Erfindung, eine Schlingfederkupplung der im Oberbegriff des Anspruches 1 angegebenen Art zu schaffen, die vorzugsweise eine regelbare Drehmomentübertragung möglich macht und es ferner ermöglicht, bei einem Lastwechsel den Momentenfluss nicht zu unterbrechen.

Die Lösung dieser Aufgabe erfolgt durch die Merkmale des Anspruchs 1.

Demgemäß wird bei einer erfindungsgemäßen Schlingfederkupplung zur Vermeidung einer Unterbrechung des Momentenflusses bei einem Lastwechsel eine Übergabe der Stellkraft an das jeweils andere Federelement eingeleitet und gleichzeitig die Krafteinleitung bzw. Drehmomentübertragung auf das andere Federelement verlegt. Während dieses Vorganges bleibt die Vorspannung der Feder vorzugsweise voll erhalten.

Die Unteransprüche haben vorteilhafte Weiterbildungen der Erfindung zum Inhalt.

Eine Möglichkeit, eine Schlingfederkupplung drehrichtungsunabhängig zu gestalten, ist die Ansteuerung der Federn über eine Seilzuganordnung.

Eine weitere vorteilhafte alternative Möglichkeit, eine Schlingfederkupplung drehrichtungsunabhängig auszuführen, ist eine Ansteuerung der Federn über eine Hydraulikanordnung, wobei der Ausgleich des Lastenwechselspiels über ein Verschieben von Hydraulikflüssigkeit zwischen zwei Hydraulikzylindern erfolgt, die über Umlenkhebel oder direkt mit den Federenden in Wirkverbindung stehen.

Eine weitere alternative Möglichkeit, die erfindungsgemäße Schlingfederkupplung drehrichtungsunabhängig auszuführen, ist das Vorsehen einer in die Kupplung integrierten Kardangelenkanordnung, welche durch relatives Schwenken einen Lastwechsel ausgleicht und dabei die Vorspannung der Schlingfeder aufrecht erhält.

Schließlich wird als weitere alternative Möglichkeit der Ausbildung einer erfindungsgemäßen drehrichtungsunabhängigen Schlingfederkupplung vorgeschlagen, eine rein rotatorische Ansteuerung über einen doppelten kombinierten Planetensatz vorzusehen.

Insgesamt bedeutet dies, dass erfindungsgemäß zur Erreichung einer drehrichtungsunabhängigen Ausführung der erfindungsgemäßen Schlingfederkupplung zwischen den Federenden der Schlingfeder und einem Aktuator ein Ausgleichsgetriebe vorgesehen ist, das eine Ansteuerung der Federenden derart vornimmt, dass je nach Drehrichtung ein Wechsel zwischen den Federenden für die Einleitung der Stellkräfte einerseits und die Drehmoment- bzw. Krafteinleitung andererseits möglich ist und dabei dennoch die Aufrechterhaltung der Vorspannung der Schlingfeder möglich ist, wozu bei allen zuvor beschriebenen bevorzugten Ausführungsformen durch das Vorsehen des Ausgleichsgetriebes der Schlingfeder ein zusätzlicher Freiheitsgrad verliehen wird.

Die Unteransprüche haben weitere vorteilhafte Ausführungsformen der Erfindung zum Inhalt.

Weitere Einzelheiten, Vorteile und Merkmale der Erfindung ergeben sich aus nachfolgender Beschreibung einer Ausführungsform anhand der Zeichnung. Es zeigt:
- Fig. 1: eine stark schematisch vereinfachte Stirnansicht des generellen Aufbaues einer Schlingfederkupplung,
- Fig. 2: eine schematisch stark vereinfachte Stirnansicht einer erfindungsgemäßen Schlingfederkupplung,
- Fig. 3: eine ebenfalls schematisch stark vereinfachte Seitenansicht der Schlingfederkupplung gemäß Fig. 2,
- Fig. 4: eine schematisch stark vereinfachte Darstellung einer ersten Ausführungsform eines Ausgleichsgetriebes der erfindungsgemäßen Schlingfederkupplung,
- Fig. 5: eine der Fig. 4 entsprechende Darstellung einer weiteren Ausführungsform des Ausgleichsgetriebes,
- Fig. 6: eine der Fig. 4 entsprechende Darstellung einer weiteren alternativen Ausführungsform des Ausgleichsgetriebes, und
- Fig. 7: eine der Fig. 4 entsprechende schematisch vereinfachte Darstellung einer vierten denkbaren Ausführungsform des Ausgleichsgetriebes der erfindungsgemäßen Schlingfederkupplung.

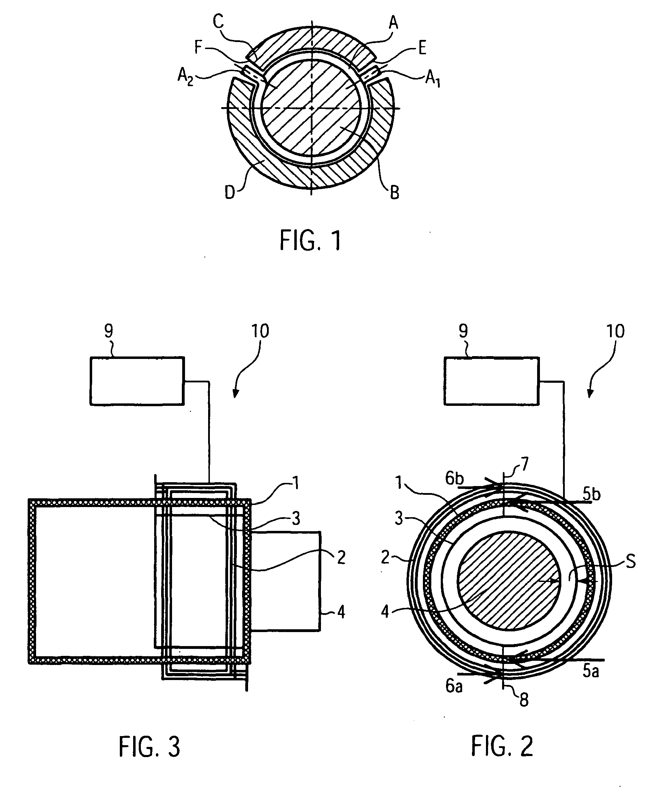

In Fig. 1 ist zur Erläuterung eines generell möglichen Aufbaues einer Schlingfederkupplung eine Schlingfeder A dargestellt, die mit Vorspannung auf einer fixierten Achse B angeordnet ist. An den beiden in oder durch Ausnehmungen E und F ragenden Federenden A1 und A2 greift je nach Drehrichtung ein Segment C eines Antriebsteils an. Bei Last am Abtrieb wird durch Formschluss über das jeweilige Federende A1 bzw. A2 und ein Segment D mitgedreht. Entsteht am Abtrieb ein Drehmoment, welches den Antrieb überholen will, blockiert das Segment D über das jeweilige Federelement A1 bzw. A2 der Schlingfeder A.

Dieses System bedingt ein minimales Spiel zwischen den Flanken der Segmente C und D und den Federenden A1 und A2 und ist drehrichtungsunabhängig. Die Wicklungsrichtung der Schlingfeder A hat ebenfalls keinen Einfluss auf die Funktion.

Anstelle einer fixierten Achse B kann ein entsprechender Aufbau in einer in Fig. 1 nicht näher dargestellten Hülse in einem Gehäuse vorgesehen sein. Die Enden A1 und A2 der Schlingfeder A sind dann entsprechend nach innen gebogen.

Die in den Fig. 2 und 3 dargestellte Schlingfederkupplung 10 weist eine erste Welle 4 auf, die von einer Schlingfeder 3 umgeben ist, wobei die Schlingfeder 3 in einer definierten Wickelrichtung um die erste Welle 4 herum gewickelt ist und zwei sich im Beispielsfalle in entgegengesetzter Richtung radial erstreckende Schlingfederenden 7 und 8 aufweist.

Ferner weist die Schlingfederkupplung 1 eine zweite hohle Welle 1 auf, die konzentrisch zur ersten Welle 4 um die Schlingfeder 3 herum angeordnet ist. Diese zweite Welle 1 weist bei der dargestellten Ausführungsform eine in der Zeichnung aufgrund der schematischen Vereinfachung nicht näher dargestellte Ausnehmung auf, so dass die zweite Welle 1 nur in Wickelrichtung der Schlingfeder 3 gegen die radialen Schlingfederenden 7 und 8 stoßen kann.

Die erfindungsgemäße Schlingfederkupplung 10 weist ferner einen Aktuator 2 auf, der zur Aufbringung einer geregelten Tangentialkraft auf zumindest eines der Schlingfederenden 7 bzw. 8 entgegen der Wickelrichtung der Schlingfeder 3 vorgesehen ist. Durch das Vorsehen dieses Aktuators 2 und seiner Wirkung auf das bzw. die Schlingfederenden 7 bzw. 8 entgegen der Wickelrichtung wird erreicht, dass die Drehmomentübertragung der erfindungsgemäßen Schlingfederkupplung 10 regelbar ist, da durch die Regelbarkeit der Aufbringung der Tangentialkraft im Gegensatz zu bisher bekannten Schlingfederkupplungen mit reiner An-/Aus-Funktion auch Zwischenzustände erreichbar sind, in denen die Schlingfeder 3 gezielt Schlupf zulässt, was die Regelung des zu übertragenden Drehmomentes möglich macht.

Hierzu können die Kontaktflächen der Schlingfeder 3 und der ersten Welle 4 wahlweise ohne oder mit gleicher oder unterschiedlicher Beschichtung versehen sein. Diese Beschichtungen können vorzugsweise aus Papier, Karbon, Sintermaterialien oder Molybdän bestehen.

Die Reibflächen können ferner trocken oder in einem Fluid, vorzugsweise Öl, gegeneinander laufen.

Wie zuvor bereits erläutert wurde, kann die zweite Welle 1 über die Schlingfeder 3 mit der ersten Welle 4 über ein regelbares Drehmoment in Verbindung gebracht werden.

Der über der zweiten Welle 1 angeordnete Aktuator 2 kann beispielsweise in Form eines elektrischen Stellmotors ausgeführt werden. Vorzugsweise kann der Aktuator 2 bei einer Ausführungsform der erfindungsgemäßen Schlingfederkupplung mit einer Drehrichtung auf das entsprechende Schlingfederende 7 bzw. 8 entgegen der Wickelrichtung eine geregelte Kraft in tangentialer Richtung ausüben. Bei einer ebenfalls denkbaren Ausführungsform mit wählbarer Drehrichtung kann der Aktuator das entsprechende Schlingfederende 7 bzw. 8 mit einer geregelten Kraft belasten.

Die Funktionsweise der erfindungsgemäßen Schlingfederkupplung 10 ist wie folgt:

Über die Welle 4 wird ein Drehmoment eingeleitet. Abhängig von der Drehrichtung kommt die Welle 1 mit einer Fläche der Ausnehmung an einem der beiden Schlingfederenden 7 bzw. 8 zur Anlage und es baut sich eine Kraft auf, die in Fig. 2 mit den Pfeilen 5A bzw. 5B gekennzeichnet ist. Durch diese Kraft wird die Schlingfeder 3 zugezogen. Die Schlingfeder 3 kommt hierbei an ihrem Innendurchmesser auf der Welle 4 zur Anlage. Aus der Reibungskraft zwischen der Welle 4 und der Schlingfeder 3 resultiert das übertragene Drehmoment und gleichzeitig eine mit dem übertragenen Drehmoment zunehmende Anpressung der Schlingfeder 3 mit entsprechend zunehmender Reibkraft. Ohne Einsatz des Aktuators 2 stellt sich das Drehmoment durch Selbstverstärkung auf das Maximaldrehmoment der Schlingfederkupplung 10 ein.

Grundsätzlich sind folgende Ausführungen der erfindungsgemäßen Schlingfederkupplung 10 denkbar:

Der Aktuator 2 kann mit der Welle 1 rotieren. Das Drehmoment wird mit dem Aktuator 2 geregelt, indem dieser das freie Schlingfederende 7 bzw. 8 mit einer geregelten Kraft (Pfeile 6A bzw. 6B in Fig. 2) beaufschlagt. Auf diese Weise wird die Schlingfeder 3 entlastet und das übertragbare Drehmoment reduziert. Die Bestimmung der Stellkraft und damit das übertragbare Drehmoment kann als feste Stellgröße vorgegeben werden.

Bevorzugterweise ist der Aktuator 2 in ein Regelsystem integriert, das in die Fig. 2 und 3 durch den Block 9 symbolisiert ist. Das Drehmoment wird dann in Abhängigkeit geeigneter Parameter, z.B. des Radschlupfes oder der Drosselklappenstellung bei Kraftfahrzeugen, direkt oder indirekt vorgegeben.

Eine zweite denkbare Ausführungsform der erfindungsgemäßen Schlingfederkupplung 10 entspricht in ihrer prinzipiellen Funktionsweise der zuvor erläuterten ersten Ausführungsform. Der Aktuator 2 ist bei dieser Ausführungsform an einem in den Fig. 2 und 3 nicht näher dargestellten Gehäuse befestigt. Das Drehmoment wird mit dem Aktuator 2 geregelt, indem dieser das jeweils freie Schlingfederende 7 bzw. 8 mit einer geregelten Kraft 6A bzw. 6B beaufschlagt. Auf diese Weise wird die Schlingfeder 3 entlastet und das übertragbare Drehmoment reduziert. Dazu wird ein in den Fig. 2 und 3 nicht näher dargestelltes Druckelement des Aktuators 2 gegebenenfalls dem entsprechenden Schlingfederende 7 bzw. 8 nachgeführt. Auf diese Weise lässt sich je nach Anforderung auch direkt ideal die Drehzahl regeln.

Bei einer dritten denkbaren Ausführungsform der erfindungsgemäßen Schlingfederkupplung 10 entspricht deren prinzipielle Funktionsweise wieder den Ausführungsformen 1 und 2. Bei dieser Ausführungsform kann jedoch der Aktuator 2 in die Welle 4 integriert werden. Auch bei dieser Ausführungsform wird das Drehmoment mit dem Aktuator 2 geregelt, indem dieser wiederum das jeweils freie Schlingfederende 7 bzw. 8 mit der geregelten Kraft 6A bzw. 6B beaufschlagt. Auch bei dieser Ausführungsform wird auf diese Weise die Schlingfeder 3 entlastet und das übertragbare Drehmoment reduziert. Das auch bei dieser Ausführungsform vorgesehene Druckelement des Aktuators 2 wird gegebenenfalls dem entsprechenden Schlingfederende 7 bzw. 8 nachgeführt. Somit kann auch bei dieser Ausführungsform, je nach Anforderung, auch direkt ideal die Differenzdrehzahl zum Motor, vorzugsweise Verbrennungsmotor, geregelt werden.

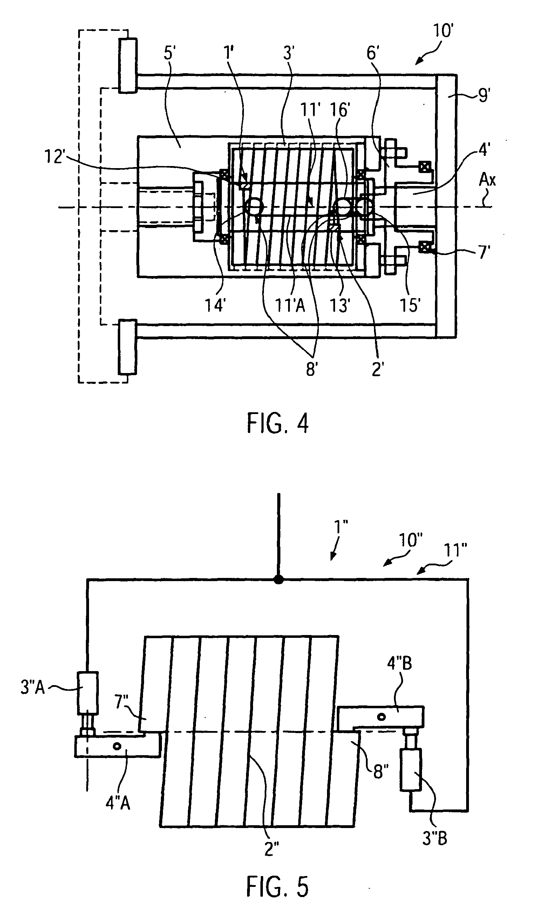

In Fig. 4 ist eine weitere Ausführungsform der erfindungsgemäßen Schlingfederkupplung dargestellt, die in ihrer Gesamtheit mit der Bezugsziffer 10' dargestellt ist. Bei dieser Ausführungsform ist zur Vereinfachung der Darstellung der Aktuator weggelassen, der in einer Art und Weise ausgeführt sein kann, wie sie vorangehend beschrieben worden ist. Dies trifft auch auf die nachfolgend noch zu beschreibenden Ausführungsformen gemäß den Fig. 5 bis 7 zu.

Die Ausführungsform der Schlingfederkupplung 10' gemäß Fig. 4 weist ein Ausgleichsgetriebe auf, das bei dieser Ausführungsform als Seilzuganordnung 11' ausgeführt ist.

Die Seilzuganordnung 11' weist zunächst einen Seilzug 11'A auf, der mit einem seiner Enden 12' an einem Federende 1' und mit seinem anderen Ende 13' an einem anderen Federende 2' der Schlingfeder 3' fixiert ist. Dieser Seilzug 11'A wird von drei Seilrollen 14', 15' und 16' geführt, wobei die Seilrollen 14' und 16' gehäusefest (relativ zu einer Abstützung 9') angeordnet sind, wohingegen die Seilrolle 15' auf einem Versteller 6' fixiert ist, der über ein Axiallager 7' entlang einer Achse AX der Schlingfederkupplung 10' verschieblich gelagert ist.

Diese Anordnung ermöglicht es, die Schlingfederkupplung 10' drehrichtungsunabhängig auszugestalten, wobei die Ansteuerung der Federenden 1' und 2' über die Seilzuganordnung 11' in folgender Weise erfolgt. Wird der Versteller 6' über das Axiallager 7' gemäß der in Fig. 4 gewählten Darstellung nach rechts bewegt, spannt sich über die Seilrollen 14', 15' und 16' der Seilzug 11'A und legt die Schlingfeder 3' an einen innen liegenden Federträger 4' an. Je nach Drehrichtung kommt dann eines der beiden Federenden 1' bzw. 2' an einer äußeren angetriebenen Trommel 5' zum Anliegen und überträgt damit ein Drehmoment. Bei einem Lastwechsel wird dieses Ende 1' bzw. 2' der Feder 3' entlastet, wird vom Anschlag an der Trommel 5' abgehoben und damit kommt das jeweils andere Federende 1' bzw. 2' zum Anliegen an der Trommel 5'. Dabei werden die sich verändernden Seillängen über die am Versteller 6' angebrachte Seilrolle 15' ausgeglichen. Die Schlingfeder 3' behält aber während des Lastwechselvorganges ihre Vorspannung, wobei sich nach außen ein Lastwechsel nur über ein geringes Spiel zwischen den beiden Federenden 1' und 2' im gespannten Zustand bemerkbar macht, was beispielsweise auch bei konventionellen Lamellenkupplungen durch das Spiel in der Verzahnung auftritt, so dass hierin kein Nachteil der erfindungsgemäßen Schlingfederkupplung 10' zu sehen ist.

Die Ansteuerung der Federenden 1' und 2' über die Seilzuganordnung 11' ist auch bei einer außen wirkenden Schlingfederkupplung realisierbar, die eine in einer Bohrung wirkende Schlingfederkupplung darstellt.

Eine weitere Ausführungsmöglichkeit für das Ausgleichsgetriebe der erfindungsgemäßen Schlingfederkupplung ist anhand der Darstellung der Fig. 5 verdeutlicht. Die dort mit 10'' gekennzeichnete Schlingfederkupplung weist eine Schlingfeder 2'' auf, deren Federenden 7'' und 8'' über Umlenkhebel 4''A bzw. 4''B mit Hydraulikzylindern 3''A bzw. 3"B verbunden sind. Die Hydraulikzylinder 3''A und 3''B sind in einer Hydraulikleitung 1'' angeordnet, die mit dem ebenfalls in Fig. 5 nicht näher dargestellten Aktuator, in diesem Falle einem hydraulischen Aktuator, in Verbindung steht.

Um auch diese Ausführungsform der erfindungsgemäßen Schlingfederkupplung 10'' drehrichtungsunabhängig auszuführen, werden die Federenden 7'', 8'' mittels der das Ausgleichsgetriebe 11'' darstellenden zuvor beschriebenen Hydraulikanordnung angesteuert, wobei der Ausgleich des Lastwechselspiels analog zur Ausführungsform gemäß Fig. 4 über ein Verschieben von Hydraulikflüssigkeit zwischen den Hydraulikzylindern 3''A und 3''B bewerkstelligt wird, welche auf die Federenden 7'' bzw. 8'' der Schlingfeder 2'' über die Umlenkhebel 4''A bzw. 4''B zugreifen. Hierbei wird über die gemeinsame Hydraulikleitung 1'' eine Druckbeaufschlagung durchgeführt und dadurch eine Kraft auf die Federenden 7'' bzw. 8'' ausgeübt. Bei einem Lastwechsel wird die Hydraulikflüssigkeit zwischen den beiden Zylindern 3''A und 3" B hin- und hergeschoben, ohne dass die Vorspannung der Schlingfeder 2'' dadurch beeinträchtigt würde.

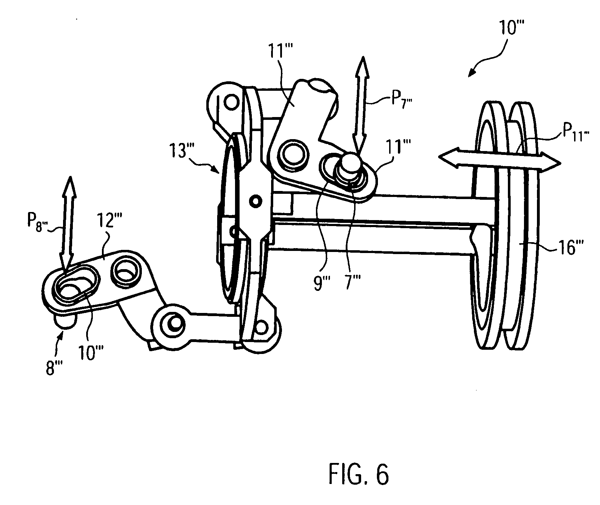

In Fig. 6 ist in schematisch vereinfachter schematischer Darstellung eine weitere Ausführungsform der erfindungsgemäßen Schlingfederkupplung 10''' bzw. eine weitere Ausführungsform des in dieser Schlingfederkupplung 10''' integrierten Ausgleichsgetriebes 11''' dargestellt. Bei dieser Ausführungsform handelt es sich um eine in der Schlingfederkupplung 10''' integrierte Kardangelenkanordnung, die als Ausgleichsgetriebe 11''' fungiert. Die Kardangelenkanordnung 11''' weist hierfür eine Schiebemuffe 16''' auf, deren Längsbeweglichkeit durch den Doppelpfeil P_{11'''} symbolisiert ist. Die Schlingfeder ist durch deren Federenden symbolisiert, die im Beispielsfalle mit sogenannten Stellpilzen 7''' bzw. 8''' symbolisiert sind, deren jeweilige Bewegungsrichtung durch die Doppelpfeile P_{7'''} bzw. P_{8'''} symbolisiert sind.

Die Stellpilze 7''' und 8''' sind jeweils in Langlöchern 9''' bzw. 10''' von gelenkig geführten Verbindungshebeln 11''' bzw. 12''' angeordnet, die wiederum an einem mit der Schiebemuffe 16''' verbundenen Zentralteil 13''' der Kardangelenkanordnung 11''' fixiert sind. Die Kardangelenkanordnung 11''' stellt, wie gesagt, ein in der Schlingfederkupplung 10''' integriertes Bauteil dar, welches durch relatives Schwenken einen Lastwechsel ausgleicht und dabei die Vorspannung der Schlingfeder aufrechterhält.

Wird die Schiebemuffe 13''' entsprechend der Bewegungsrichtung P_{11'''} hin- und herbewegt, so werden dadurch die beiden Federenden über die daran befestigten Stellpilze 7''' bzw. 8''' aufgespreizt und mit einer definierten Kraft vorgespannt. Gleichzeitig kann sich die Schlingfeder aber frei verdrehen, ohne dass sie die Vorspannung verliert, da in einem bestimmten Maß ein Ausgleich über die Kardangelenkanordnung 11''' erfolgt, was sich aus der Prinzipskizze gemäß Fig. 6 im Einzelnen ergibt, wobei die über die Stellpilze 7''' bzw. 8''' repräsentierten Federenden in Fig. 6 in einer Grundstellung dargestellt sind.

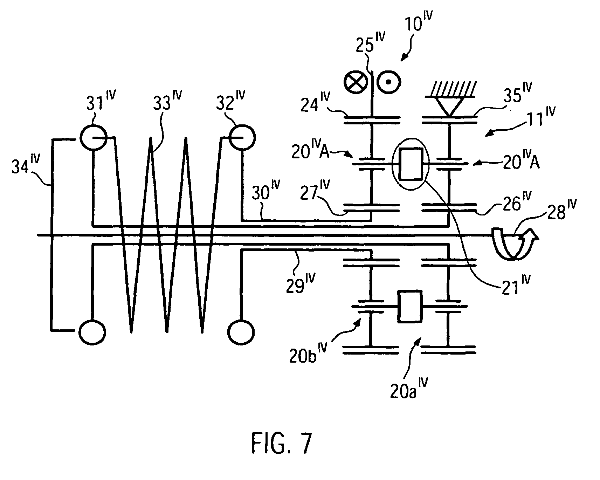

In Fig. 7 ist eine weitere Ausführungsform der erfindungsgemäßen Schlingfederkupplung 10^{IV} dargestellt, die als Ausgleichsgetriebe 11 ^{IV} in diesem Falle einen kombinierten Planetensatz aufweist.

Der kombinierte Planetensatz weist hierfür eine erste Planetensatzanordnung 20^{IV}A und eine zweite Planetensatzanordnung 20^{IV}B auf, die einen kombinierten Planetenträger 21^{IV} besitzen, der Planetenräder 20a^{IV} bzw. 20b^{IV} trägt. Ferner ist ein feststehendes Hohlrad 23^{IV} des Planetensatzes 20^{IV}A sowie ein Hohlrad 24^{IV} des Planetensatzes 20^{IV}B vorgesehen, welches mit einem Betätigungshebel 25^{IV} verbunden ist, dessen Bewegungsrichtungen durch die Symbole Punkt bzw. Kreuz in einem jeweiligen Kreis dargestellt sind.

Ferner sind Sonnenräder 26^{IV} bzw. 27^{IV} vorgesehen, wobei das Sonnenrad 26^{IV} auf einer ersten um eine Zentralwelle 28^{IV} herum angeordneten Hohlwelle 29^{IV} angeordnet ist, während das zweite Sonnenrad 27^{IV} auf einer zweiten Hohlwelle 30^{IV} angeordnet ist, die um die erste Hohlwelle 29^{IV} herum angeordnet ist.

Das Sonnenrad 26^{IV} ist über seine Hohlwelle 29^{IV} mit einem ersten Federende 31^{IV} verbunden, während das zweite Sonnenrad 27'' über seine Hohlwelle 30^{IV} mit einem zweiten Federende 32^{IV} einer Schlingfeder 33^{IV} verbunden ist. Die Schlingfeder 33^{IV} weist einen Federträger 34^{IV} mit Anschlägen auf.

Auch diese Ausführungsform der erfindungsgemäßen Schlingfederkupplung 10^{IV} ist über das Vorsehen des zuvor beschriebenen Ausgleichsgetriebes 11^{IV} zwischen einem in Fig. 7 ebenfalls nicht dargestellten Aktuator und der Schlingfeder 33^{IV} drehrichtungsunabhängig ausgeführt. Es ist eine rein rotatorische Ansteuerung über den zuvor beschriebenen doppelten kombinierten Planetensatz möglich. Gegenüber dem Federträger 34^{IV}, welcher die Achsmitte des Ausgleichsgetriebes L^{IV} darstellt, bleiben die Sonnenräder 26^{IV} und 27^{IV} in einem gewissen Winkel frei verdrehbar, bis sie an den Anschlägen des Federträgers 34^{IV} anstehen. Wird der Betätigungshebel 25^{IV} verdreht, was eine Verdrehung des Hohlrades 24^{IV} darstellt, verdrehen sich die beiden Sonnenräder 26^{IV} und 27^{IV} relativ zueinander und spreizen dadurch die Schlingfeder 33^{IV} auf. Das jeweilige Ende 31^{IV} bzw. 32^{IV} der Schlingfeder 33^{IV} stützt sich dann am betreffenden Anschlag am Federträger 34^{IV} ab. Bei einem Lastwechsel verdreht sich die Schlingfeder 33^{IV} relativ zum Federträger 34^{IV}, was über den zuvor beschriebenen doppelten Planetensatz auf einfache Art und Weise möglich ist. Die Schlingfeder 33^{IV} behält dabei aber ihre Vorspannung.

Die beiden Sonnenräder 26^{IV} und 27^{IV} können sich im normalen Betrieb relativ zur Antriebswelle 28^{IV} in einem gewissen Rahmen (beispielsweise ca. ± 25°, von den Anschlägen festgelegt) frei verdrehen, sind aber miteinander über den Planetenträger 21^{IV} verbunden und können sich relativ zueinander nicht verdrehen. Wird der mit dem Hohlrad 24' verbundene Betätigungshebel 25^{IV} verdreht, so verdrehen sich dadurch auch die beiden Sonnenräder 26^{IV} und 27^{IV} relativ zu einander. Die Verdrehbarkeit auf der Antriebswelle 28^{IV} wird dadurch jedoch nicht beeinflusst.

Alle zuvor genannten Ausführungsformen haben den Vorteil der Drehrichtungsunabhängigkeit, was die beschriebenen besonders bevorzugten Ausführungsformen der erfindungsgemäßen Schlingfederkupplung für viele neue Anwendungsgebiete, insbesondere im Automobilbereich, geeignet macht, in denen Drehrichtungsunabhängigkeit fast immer gefordert wird, da es in diesen Anwendungsbereichen häufig zu Lastwechseln kommen kann.

### Bezugszeichenliste

- 1: Zweite hohle Welle
- 2: Aktuator
- 3: Schlingfeder
- 4: Erste Welle
- 5A, 5B: Kraftpfeile
- 6A, 6B: Kraftpfeile
- 7, 8: Schlingfederenden
- 9: Regeleinrichtung
- 10, 10' , 10'', 10''', 10''': Schlingfederkupplung
- 11': Seilzuganordnung
- 11'A: Seilzug
- 12', 13': Enden des Seilzugs
- 14'-16': Seilrollen
- 1', 2': Federenden
- 3': Schlingfeder
- 4': Federträger
- 5': Trommel
- 6': Verstärker
- 7': Axiallager
- 9': Abstützung
- 11'A: Seilzug
- 11', 11'', 11''', 11^{IV}: Ausgleichsgetriebe
- 1'': Hydraulikleitungen
- 2'': Schlingfeder
- 3''A, 3''B: Hydraulikzylinder
- 4''A, 4''B: Umlenkhebel
- 7''', 8''': Stellpilze
- 9''', 10''': Langlöcher
- 11''', 12''': Anlenkhebel
- 13''': Zentralteil
- 16''': Schiebemuffe
- 20^{IV}A, 20^{IV}B: Planetensätze
- 21^{IV}: gemeinsamer Planetenträger
- 20a^{IV}, 20b^{IV}: Planetenräder
- 24^{IV}, 35^{IV}: Hohlrad
- 25^{IV}: Betätigungshebel
- 26^{IV}, 27^{IV}: Sonnenräder
- 28^{IV}: Zentral- bzw. Antriebswelle
- 29^{IV}: Erste Hohlwelle
- 30^{IV}: Zweite Hohlwelle
- 31^{IV}, 32^{IV}: Federenden
- 33^{IV}: Schlingfeder
- 34^{IV}: Federträger mit Anschlägen
- A: Schlingfeder
- B: Fixierte Achse
- A1, A2: Federenden
- C, D: Segmente
- Ax: Längsachse

## Patentansprüche

1. Schlingfederkupplung (10)
- mit einer ersten Welle (4);
- mit einer Schlingfeder (3), die um die erste Welle (4) in einer Wickelrichtung herumgewickelt ist und zwei Schlingfederenden (7, 8) aufweist; und
- mit einer zweiten hohlen Welle (1), die konzentrisch zur ersten Welle (4) um die Schlingfeder (3) herum angeordnet ist;
**gekennzeichnet durch**
- einen Aktuator (2) zur Aufbringung einer geregelten Tangentialkraft auf zumindest eines der Schlingfederenden (7, 8) entgegen der Wickelrichtung der Schlingfeder (3) und
- ein Ausgleichsgetriebe (11' bis 11^{IV}), das zwischen dem Aktuator (2) und den Schlingfederenden der Schlingfeder angeordnet ist.

2. Schlingfederkupplung nach Anspruch 1, **dadurch gekennzeichnet, dass** das Ausgleichsgetriebe (11') als Seilzuganordnung ausgebildet ist, die einen mit den Schlingfederenden (1', 2') verbundenen Seilzug (11'A) aufweist, der mit einem entlang der Längsachse (AX) der Schlingfeder (3') längsverschieblichen Versteller (6') verbunden ist.

3. Schlingfederkupplung nach Anspruch 1, **dadurch gekennzeichnet, dass** das Ausgleichsgetriebe (11") als Hydraulikanordnung ausgebildet ist, die in einer Hydraulikleitung (1") angeordneten Hydraulikzylinder (3"A, 3"B) aufweist, die über zugeordnete Umlenkhebel (4"A bzw. 4"B)oder direkt mit den Federenden (7", 8") der Schlingfeder (2") in Wirkverbindung stehen.

4. Schlingfederkupplung nach Anspruch 1, **dadurch gekennzeichnet, dass** das Ausgleichsgetriebe (11"') als Kardangelenkanordnung ausgebildet ist.

5. Schlingfederkupplung nach Anspruch 1, **dadurch gekennzeichnet, dass** das Ausgleichsgetriebe (11^{IV}) als kombinierter Planetensatz (20^{IV}A, 20^{IV}B) ausgebildet ist, der einen gemeinsamen Planetenträger (21^{IV}) aufweist, und der zwei Sonnenräder (26^{IV}, 27^{IV}) aufweist, die über zugeordnete und ineinander angeordnete Hohlwellen (29^{IV} bzw. 30^{IV}) mit den Federenden (31^{IV} bzw. 32^{IV}) der Schlingfeder (33^{IV}) verbunden sind.

## Claims

1. A wrap spring clutch (10) comprising
- a first shaft (4);
- a wrap spring (3) which is wound around the first shaft (4) in a winding direction and has two wrap spring ends (7, 8); and
- a second hollow shaft (1) which is arranged concentrically with the first shaft (4) around the wrap spring (3);
**characterized by**
- an actuator (2) for applying a regulated tangential force on at least one of the wrap spring ends (7, 8) contrary to the winding direction of the wrap spring (3), and
- a differential gear (11' to 11^{IV}) arranged between the actuator (2) and the wrap spring ends of the wrap spring.

2. The wrap spring clutch according to claim 1, **characterized in that** the differential gear (11') is configured as a cable pull arrangement which includes a cable pull (11'A) connected with the wrap spring ends (1', 2') and connected with an adjuster (6') that is longitudinally displaceable along the longitudinal axis (AX) of the wrap spring (3').

3. The wrap spring clutch according to claim 1, **characterized in that** the differential gear (11") is configured as a hydraulic arrangement which includes hydraulic cylinders (3"A, 3"B) that are arranged in a hydraulic pipe (1") and are operatively connected with the spring ends (7", 8") of the wrap spring (2") directly or by means of associated reversing levers (4"A and 4"B, respectively).

4. The wrap spring clutch according to claim 1, **characterized in that** the differential gear (11"') is configured as a cardan joint arrangement.

5. The wrap spring clutch according to claim 1, **characterized in that** the differential gear (11^{IV}) is configured as a combined planetary gear set (20^{IV}A, 20^{IV}B) which includes a shared planet-wheel carrier (21^{IV}) and includes two sun wheels (26^{IV}, 27^{IV}) that are connected with the spring ends (31^{IV} and 32^{IV}, respectively) of the wrap spring (33^{IV}) by means of associated hollow shafts (29^{IV} and 30^{IV}, respectively) arranged inside each other.

## Revendications

1. Embrayage à ressort enroulé (10) comportant
- un premier arbre (4);
- un ressort enroulé (3) qui est enroulé dans un sens d'enroulement autour du premier arbre (4) et présente deux extrémités de ressort enroulé (7, 8) ; et
- un deuxième arbre (1) creux qui est agencé autour du ressort enroulé (3) de façon concentrique au premier arbre (4) ;
**caractérisé par**
- un actionneur (2) pour l'application d'une force tangentielle régulée sur au moins l'une des extrémités de ressort enroulé (7, 8) à l'encontre du sens d'enroulement du ressort enroulé (3), et
- un engrenage différentiel (11' à 11^{IV}) qui est agencé entre l'actionneur (2) et les extrémités de ressort enroulé du ressort enroulé.

2. Embrayage à ressort enroulé selon la revendication 1, **caractérisé en ce que** l'engrenage différentiel (11') est réalisé sous forme d'agencement de tirant à câble présentant un tirant à câble (11'A) qui est relié aux extrémités de ressort enroulé (1', 2') et qui est relié à un moyen d'ajustage (6') qui peut être déplacé longitudinalement le long de l'axe longitudinal (AX) du ressort enroulé (3').

3. Embrayage à ressort enroulé selon la revendication 1, **caractérisé en ce que** l'engrenage différentiel (11 ") est réalisé sous forme d'agencement hydraulique comportant des cylindres hydrauliques (3"A, 3"B) qui sont agencés dans un conduit hydraulique (1") et qui sont en liaison fonctionnelle avec les extrémités de ressort (7", 8") du ressort enroulé (2") de manière directe ou au moyen de leviers de renvoi associés (4"A et 4"B, respectivement).

4. Embrayage à ressort enroulé selon la revendication 1, **caractérisé en ce que** l'engrenage différentiel (11"') est réalisé sous forme d'agencement de joint de cardan.

5. Embrayage à ressort enroulé selon la revendication 1, **caractérisé en ce que** l'engrenage différentiel (11^{IV}) est réalisé sous forme de jeu de roues planétaires (20^{IV}A, 20^{IV}B) combiné qui présente un support de roue planétaire commun (21^{IV}) et qui comporte deux roues solaires (26^{IV}, 27^{IV}) qui sont reliées aux extrémités de ressort (31^{IV} et 32^{IV}, respectivement) du ressort enroulé (33^{IV}) par des arbres creux (29^{IV} et 30^{IV}, respectivement) associés et agencés l'un dans l'autre.
